# EUROPÄISCHE PATENTSCHRIFT

(11) **EP 2 929 399 B1**
(45) Veröffentlichungstag und Bekanntmachung des Hinweises auf die Patenterteilung: **26.12.2018**
(21) Anmeldenummer: 14700968.2
(22) Anmeldetag: 08.01.2014
(51) Int. Cl.: G05B 19/042, G05B 19/418, G06F 21/36, G06F 3/048

(54) **VERFAHREN UND ANORDNUNG ZUR GESICHERTEN BEDIENUNG EINER SICHERHEITSKRITISCHEN EINRICHTUNG**
METHOD AND ARRANGEMENT FOR THE SAFEGUARDED OPERATION OF A SAFETY-CRITICAL DEVICE
PROCÉDÉ ET ENSEMBLE POUR LA CONDUITE SÉCURISÉE D'UNE INSTALLATION À SÉCURITÉ CRITIQUE

(30) Priorität: 29.01.2013 DE 102013201430
(43) Veröffentlichungstag der Anmeldung: 14.10.2015
(73) Patentinhaber: Siemens Mobility GmbH, 81739 München (DE)
(72) Erfinder: BRABAND, Jens, 38106 Braunschweig (DE)
(86) Internationale Anmeldenummer: PCT/EP2014/050211
(87) Internationale Veröffentlichungsnummer: WO 2014/117966

(56) Entgegenhaltungen:
- EP-A1- 2 246 756
- EP-A1- 2 482 154
- DE-A1-102010 015 285
- DE-C2- 19 508 731

## Beschreibung

Die Erfindung betrifft ein Verfahren zur gesicherten Bedienung einer sicherheitskritischen Einrichtung. Bei der sicherheitskritischen Einrichtung kann es sich beispielsweise um ein Steuer- und Regelsystem handeln, wie es zur Stellwerksansteuerung sowie Antriebs- und Bremsenansteuerung für Verkehrsmittel verwendet wird; auch in der Fertigungs- und Prozessleittechnik sowie in Kraftwerken werden Steuer- und Regelungssysteme eingesetzt und stellen stets sicherheitsrelevante Einrichtungen dar. So sind aus den veröffentlichten europäischen Patentanmeldungen EP 2 246 756 A1 und EP 2 482 154 A1 Verfahren zum Bedienen einer sicherheitskritischen Einrichtung in Form einer sicherheitsgerichteten industriellen Automatisierungskomponente bekannt. Eine Einrichtung zur ortsungebundenen wechselseitigen Kommunikation mit einer Sicherungseinrichtung ist in DE 195 08 731 C2 beschrieben.

Der Erfindung liegt die Aufgabe zugrunde, ein Verfahren zur gesicherten Bedienung einer sicherheitskritischen Einrichtung anzugeben, das sich vergleichsweise einfach und bequem durch führen lässt.

Zur Lösung dieser Aufgabe dient erfindungsgemäß ein Verfahren zur gesicherten Bedienung einer sicherheitskritischen Einrichtung mittels eines mobilen Kommunikationsendgerätes, wobei ein nutzerseitiges Bedienkommando durch das mobile Kommunikationsendgerät erfasst wird, wobei für die Datenhaltung und Datenbearbeitung zwei voneinander unabhängige Datenverarbeitungsprozesse eingesetzt werden, von denen einer aktiv ist und eine Anzeige des erfassten Bedienkommandos auf dem Bildschirm des Kommunikationsendgerätes bewirkt und der andere zunächst parallel mitläuft; eine das erfasste Bedienkommando betreffende Bedieninformation wird von dem mobilen Kommunikationsendgerät an die sicherheitskritische Einrichtung übermittelt, wobei das erfasste Bedienkommando von beiden Datenverarbeitungsprozessen bearbeitet wird und die dabei jeweils gebildete Bedieninformation getrennt zu der sicherheitskritischen Einrichtung übermittelt wird; von der sicherheitskritischen Einrichtung wird eine Bestätigungsinformation beziehungsweise Bestätigungsaufforderung in einer kommunikationsendgerätefremden, durch die beiden Datenverarbeitungsprozesse nicht erzeugbaren Form erzeugt und an das mobile Kommunikationsendgerät übermittelt, wobei die sicherheitskritische Einrichtung die empfangenen Bedieninformationen auf Übereinstimmung und Plausibilität überprüft und bei positivem Prüfergebnis die Bestätigungsinformation erzeugt; anhand der übermittelten Bestätigungsinformation wird von dem mobilen Kommunikationsendgerät eine Aktivierungscode-Information in einer nicht maschinenauswertbaren Form erzeugt und zusammen mit der Bestätigungsinformation auf dem mobilen Kommunikationsendgerät angezeigt; ferner wird eine durch Kombination der Aktivierungscode-Information mit einer nutzerspezifischen Operation gebildete Bestätigungsantwort durch das mobile Kommunikationsendgerät erfasst und von dem mobilen Kommunikationsendgerät zusammen mit einem aus der Bestätigungsinformation gebildeten Hashwert an die sicherheitskritische Einrichtung übertragen, und es wird im Falle einer erfolgreichen Überprüfung der Bestätigungsantwort und des Hashwertes die Bedienung der sicherheitskritischen Einrichtung ausgeführt.

Es ist zwar aus der deutschen Offenlegungsschrift DE 10 2010 015 285 A1 bekannt, eine sicherheitskritische Einrichtung über ein externes Gerät zu bedienen, jedoch ist dazu Voraussetzung, dass die sicherheitskritische Einrichtung eine nicht maschinenauswertbare Aktivierungscode-Information ausgibt, auf die hin ein Aktivierungscode manuell in die sicherheitskritische Einrichtung eingegeben wird. Daraufhin wird ein Aktivierungscode-Bitmuster erzeugt und an das externe Gerät übertragen. Dieses Gerät weist ein gerätespezifisches Bitfolgemuster auf und vergleicht das eigene Bitfolgemuster mit dem von der sichercheitskritischen Einrichtung gesendeten Aktivierungscode-Bitfolgemuster. Nur bei Übereinstimmung wird eine Aktion in der sicherheitskritischen Einrichtung ausgelöst. Dieses bekannte Verfahren setzt also voraus, dass von der sicherheitskritischen Einrichtung eine Aktivierungscode-Information erzeugt und nach Eingabe eines Aktivierungscodes ein Aktivierungscode-Bitmuster gebildet und zum externen Gerät übertragen wird. Bei dem erfindungsgemäßen Verfahren hingegen geht die Bedienung der sicherheitskritischen Einrichtung von dem Kommunikationsendgerät aus, indem dieses die Kommunikationsverbindung zur sicherheitskritischen Einrichtung aufbaut und allein die Bedienung der sicherheitskritischen Einrichtung vornimmt.

Ein wesentlicher Vorteil der Erfindung besteht darin, dass durch die kommunikationsendgeräteseitige Verwendung einer Aktivierungscode-Information in einer nicht maschinenauswertbaren Form und einer nutzerspezifischen Operation eine eindeutige Zuordnung zu einer Bedienungsperson gewährleistet ist. Außerdem ist durch die Nutzung einer Bestätigungsinformation in einer kommunikationsendgerätefremden Form seitens der sicherheitskritischen Einrichtung die Beteiligung dieser Einrichtung an dem erfindungsgemäßen Verfahren sichergestellt.

Um eine besonders gut gesicherte Bedienung der sicherheitskritischen Einrichtung zu erreichen, werden erfindungsgemäß für die Datenhaltung und die Datenbearbeitung zwei voneinander unabhängige Datenverarbeitungsprozesse eingesetzt, von denen einer aktiv ist und eine Anzeige des erfassten Bedienkommandos auf dem Bildschirm des Kommunikationsendgeräts bewirkt und der andere zunächst parallel mitläuft; das erfasste Bedienkommando wird von beiden Datenverarbeitungsprozessen bearbeitet, und es wird die dabei jeweils gebildete Bedieninformation getrennt zu der sicherheitskritischen Einrichtung übertragen; die sicherheitskritische Einrichtung überprüft die über die Übertragungskanäle empfangenen Bedieninformationen auf Übereinstimmung und Plausibilität und erzeugt bei positivem Prüfungsergebnis die Bestätigungsinformation.

Mit besonders hoher Sicherheit lässt sich das erfindungsgemäße Verfahren auch dann betreiben, wenn mit Eingang der Bestätigungsinformation im Kommunikationsendgerät der andere Datenverarbeitungsprozess aktiviert und der Bildschirm des Kommunikationsendgerätes invertiert wird, so dass auf dem Bildschirm die Aktivierungscode-Information und die Bestätigungsinformation angezeigt wird; beide Datenverarbeitungsprozesse berechnen zu der Bestätigungsinformation einen Hashwert.

Bei dem erfindungsgemäßen Verfahren kann für die Übertragungsstrecke ein einziger Übertragungskanal oder zwei Übertragungskanäle verwendet werden.

Die Erfindung bezieht sich ferner auf eine Anordnung zur gesicherten Bedienung einer sicherheitskritischen Einrichtung und stellt sich die Aufgabe, zur gesicherten Bedienung einer sicherheitskritischen Einrichtung eine Anordnung anzugeben, mit der sich vergleichsweise einfach und bequem eine gesicherte Bedienung einer sicherheitskritischen Einrichtung durchführen lässt.

Zur Lösung dieser Aufgabe dient erfindungsgemäß eine Anordnung zur gesicherten Bedienung einer sicherheitskritischen Einrichtung, die mit einem mobilen Kommunikationsendgerät kommunikativ verbunden ist, wobei die Anordnung die sicherheitskritische Einrichtung sowie das Kommunikationsendgerät umfasst und das Kommunikationsendgerät so ausgeführt ist, dass es ein nutzerseitiges Bedienkommando erfasst und für die Datenhaltung und die Datenbearbeitung zwei voneinander unabhängige Datenverarbeitungsprozesse bereithält, von denen einer aktiv ist und eine Anzeige des erfassten Bedienkommandos auf dem Bildschirm des Kommunikationsendgerätes bewirkt und der andere zunächst passiv mitläuft, eine das erfasste Bedienkommando betreffende Bedieninformation an die sicherheitskritische Einrichtung aussendet, wobei beide Datenverarbeitungsprozesse das erfasste Bedienkommando bearbeiten und die dabei jeweils gebildete Bedieninformation getrennt zu der sicherheitskritischen Einrichtung übertragen wird, anhand einer von der sicherheitskritischen Einrichtung übermittelten Bestätigungsinformation eine Aktivierungscode-Information in einer nicht maschinenauswertbaren Form erzeugt und zusammen mit der Bestätigungsinformation anzeigt und außerdem eine durch Kombination der Aktivierungscode-Information mit einer nutzerspezifischen Operation gebildete Bestätigungsantwort erfasst und zusammen mit einem aus der Bestätigungsinformation gebildeten Hashwert an die sicherheitskritische Einrichtung sendet; die sicherheitskritische Einrichtung ist so ausgebildet, dass sie die Bedieninformation empfängt, die empfangenen Bedieninformationen auf Übereinstimmung und Plausibilität überprüft und bei positivem Prüfungsergebnis eine Bestätigungsinformation in einer kommunikationsendgerätefremden, durch die beiden Datenverarbeitungsprozesse nicht erzeugbaren Form erzeugt und an das mobile Kommunikationsendgerät übermittelt und im Falle einer erfolgreichen Überprüfung der Bestätigungsantwort und des Hashwertes die Bedienung der sicherheitskritischen Einrichtung ausführt.
Bei der erfindungsgemäßen Anordnung ergeben sich sinngemäß die gleichen Vorteile, wie sie oben bereits zum erfindungsgemäßen Verfahren angegeben worden sind.

Zur besonders gut gesicherten Bedienung der sicherheitskritischen Einrichtung ist bei der erfindungsgemäßen Anordnung das Kommunikationsendgerät so ausgeführt, dass es für die Datenhaltung und die Datenbearbeitung zwei voneinander unabhängige Datenverarbeitungsprozesse bereithält, von denen einer aktiv ist und eine Anzeige des erfassten Bedienkommandos auf dem Bildschirm des Kommunikationsendgeräts bewirkt und der andere zunächst parallel mitläuft, das erfasste Bedienkommando von beiden Datenverarbeitungsprozessen bearbeitbar ist und die dabei jeweils gebildete Bedieninformation getrennt zu der sicherheitskritischen Einrichtung übertragbar ist; die sicherheitskritische Einrichtung ist derart ausgebildet, dass die empfangenen Bedieninformationen auf Übereinstimmung und Plausibilität überprüfbar und bei positivem Prüfungsergebnis die Bestätigungsinformation erzeugbar ist.

Eine besonders sichere Bedienung der sicherheitskritischen Einrichtung lässt sich mit der erfindungsgemäßen Anordnung erreichen, wenn das Kommunikationsendgerät so ausgeführt ist, dass mit Eingang der Bestätigungsinformation im Kommunikationsendgerät der andere Datenverarbeitungsprozess aktivierbar und der Bildschirm des Kommunikationsendgerätes invertierbar ist, so dass auf dem Bildschirm die Aktivierungscode-Information und die Bestätigungsinformation angezeigt wird, und mittels beider Datenverarbeitungsprozesse zu der Aktivierungscode-Information ein Hashwert berechenbar ist.

Bei der erfindungsgemäßen Anordnung ist vorteilhafterweise für die Übertragung von Informationen zwischen der sicherheitskritischen Einrichtung und dem Kommunikationsendgerät ein einziger Übertragungskanal vorgesehen. Es kann auch vorteilhaft sein, zwei Übertragungskanäle vorzusehen.

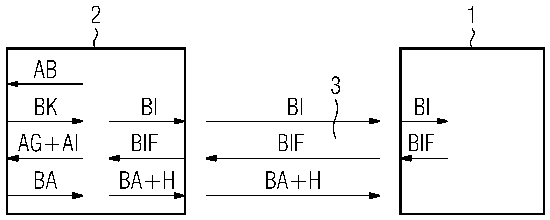

Zur weiteren Erläuterung der Erfindung ist in der Figur ein Blockschaltbild einer Anordnung zur Durchführung des erfindungsgemäßen Verfahrens dargestellt.

Wie die Figur zeigt, ist eine sicherheitskritische Einrichtung 1 mit einem mobilen Kommunikationsendgerät 2, beispielsweise einem Tablet-Rechner, über eine Übertragungsstrecke 3 kommunikativ verbunden. Bei der sicherheitskritischen Einrichtung 1 kann es sich um ein elektronisches Stellwerk handeln.

In dem Kommunikationsendgerät 2 erfolgt die Datenhaltung und die Datenabarbeitung über zwei voneinander unabhängige Datenverarbeitungsprozesse; von diesen ist der eine aktiv und steuert die Anzeige des Kommunikationsendgerätes 2, während der andere Datenverarbeitungsprozess parallel mitläuft. Einer Bedienungsperson wird die Betriebslage der sicherheitskritischen Einrichtung 1 von dem aktiven Datenverarbeitungsprozess mittels einer Anzeige AB auf dem Kommunikationsendgerät 2 angezeigt.

Will die Bedienungsperson eine Bedienhandlung vornehmen, wählt sie auf dem Kommunikationsendgerät 2 ein entsprechendes Bedienkommando BK aus und bestätigt die Eingabe. Von dem Kommunikationsendgerät 2 wird dieses Bedienkommando BK erfasst und in eine Bedieninformation BI umgesetzt. Die Bedieninformation BI wird von beiden Datenverarbeitungsprozessen bearbeitet und über die Übertragungsstrecke 3 an die sicherheitskritische Einrichtung 1 übermittelt. Die Übertragungsstrecke 3 kann einkanalig ausgebildet sein - bei entsprechender Codierung für die Signale der beiden Datenverarbeitungsprozesse; bei zweikanaliger Ausbildung kann die Codierung entfallen. Jeder Kanal kann sich dabei eindeutig gegenüber der sicherheitskritischen Einrichtung 1 über Adressen oder kryptografische Geheimnisse authentifizieren.

In der sicherheitskritischen Einrichtung werden die Signale der beiden Datenverarbeitungsprozesse auf Übereinstimmung und Plausibilität überprüft, und es wird gegebenenfalls eine Bestätigungsinformation BIF erzeugt, die eine kommunikationsendgerätefremde Form aufweist, beispielsweise ein diversitäres Format in Form einer Grafik besitzt, das die beiden Datenverarbeitungsprozesse nicht erzeugen können. Die Bestätigungsinformation BIF wird an das Kommunikationsendgerät 2 über die Übertragungsstrecke 3 gesendet.

Trifft die Bestätigungsinformation BIF bei dem Kommunikationsendgerät 2 ein, dann vertauschen die beiden Datenverarbeitungsprozesse ihre Funktionen, und der andere Datenverarbeitungsprozess wird betriebsführend. Dies wird der Bedienungsperson durch eine Invertierung des Bildschirms des Kommunikationsendgeräts.2 angezeigt. Der andere Datenverarbeitungsprozess veranlasst jetzt bei einer Bestätigungsinformation BIF mit kommunikationsendgerätefremder Form als Grafik eine Anzeige AG dieser Grafik und damit der Bestätigungsinformation BIF, während beide Datenverarbeitungsprozesse zu der Grafik einen Hashwert H berechnen; dazu generiert der andere Datenverarbeitungsprozess ein Captcha (Completely Automated Public Turing Test to tell Computers and Humans Apart), beispielsweise die letzten 5 Stellen oder Bits des Hashwertes, das eine Aktivierungscode-Information AI in einer nicht maschinenauswertbaren Form darstellt. Die Aktivierungscode-Information AI wird zusammen mit der Bestätigungsinformation BF auf dem mobilen Kommunikationsendgerät 2 angezeigt.

In dem Kommunikationsendgerät 2 wird die Aktivierungscode-Information AI bzw. das Captcha mit einer nutzerspezifischen Operation, beispielsweise Eingabe einer PIN, kombiniert und eine Bestätigungsantwort BA gebildet. Das Kommunikationsendgerät 2 überträgt anschließend die Bestätigungsantwort BA und den Hashwert H zur sicherheitskritischen Einrichtung 1.

In der sicherheitskritischen Einrichtung 1 werden die Bestätigungsantwort BA und der Hashwert H überprüft. Sind Bestätigungsantwort BA und Hashwert H nicht zu beanstanden, ist die Überprüfung erfolgreich abgeschlossen und die Bedienung der sicherheitskritischen Einrichtung 1 wird vorgenommen.

## Patentansprüche

1. Verfahren zur gesicherten Bedienung einer sicherheitskritischen Einrichtung (1) mittels eines mobilen Kommunikationsendgerätes (2), wobei
- ein nutzerseitiges Bedienkommando (BK) durch das mobile Kommunikationsendgerät (2) erfasst wird, wobei für die Datenhaltung und die Datenbearbeitung zwei voneinander unabhängige Datenverarbeitungsprozesse eingesetzt werden, von denen einer aktiv ist und eine Anzeige des erfassten Bedienkommandos (BK) auf dem Bildschirm des Kommunikationsendgeräts bewirkt und der andere zunächst parallel mitläuft,
- eine das erfasste Bedienkommando (BK) betreffende Bedieninformation (BI) von dem mobilen Kommunikationsendgerät (2) an die sicherheitskritische Einrichtung (1) übermittell wird, wobei das erfasste Bedienkommando (BK) von beiden Datenverarbeitungsprozessen bearbeitet wird und die dabei jeweils gebildete Bedieninformation (BI) getrennt zu der sicherheitskritischen Einrichtung (1) übertragen wird,
- von der sicherheitskritischen Einrichtung (1) eine Bestätigungsinformation (BIF) in einer kommunikationsendgerätefremden, durch die beiden Datenverarbeitungsprozesse nicht erzeugbaren Form erzeugt und an das mobile Kommunikationsendgerät (2) übermittelt wird, wobei die sicherheitskritische Einrichtung (1) die empfangenen Bedieninformationen (BI) auf Übereinstimmung und Plausibilität überprüft und bei positivem Prüfungsergebnis die Bestätigungsinformation (BIF) erzeugt,
- anhand der übermittelten Bestätigungsinformation (BIF) von dem mobilen Kommunikationsendgerät (2) eine Aktivierungscode-Information (AI) in einer nicht maschinenauswertbaren Form erzeugt und zusammen mit der Bestätigungsinformation (BIF) auf dem mobilen Kommunikationsendgerät (2) angezeigt wird,
- eine durch Kombination der Aktivierungscode-Information (AI) mit einer nutzerspezifischen Operation (PIN) gebildete Bestätigungsantwort (BA) durch das mobile Kommunikationsendgcrät. (2) erfasst und von dem mobilen Kommunikationsendgerät (2) zusammen mit einem aus der Bestätigungsinformation (BIF) gebildeten Hashwert (H) an die sicherheitskritische Einrichtung (1) übertragen wird und
- im Falle einer erfolgreichen Überprüfung der Bestätigungsantwort (BA) und des Hashwertes (H) die Bedienung der sicherhcitskritischen Einrichtung (1) ausgeführt wird.

2. Verfahren nach Anspruch 1, **dadurch gekennzeichnet, dass**
• mit Eingang der Bestätigungsinformation (BIF) im Kommunikationsendgerät (2) der andere Datenverarbeitungsprozess aktiviert und der Bildschirm des Kommunikationsendgerätes (2) invertiert wird, so dass auf dem Bildschirm die Aktivierungscode-Information (AI) und die Bestätigungsinformation (BIF) angezeigt wird, und
• beide Datenverarbeitungsprozesse zu der Bestätigungsinformation (BIF) einen Hashwert (H) berechnen.

3. Verfahren nach Anspruch 1 oder 2, **dadurch gekennzeichnet, dass**
• für die Übertragungsstrecke ein Übertragungskanal verwendet wird.

4. Verfahren nach Anspruch 1 oder 2, **dadurch gekennzeichnet, dass**
• für die Übertragungsstrecke zwei Übertragungskanäle verwendet werden.

5. Anordnung zur gesicherten Bedienung einer sicherheitskritischen Einrichtung (1), die mit einem mobilen Kommunikationsendgerät (2) kommunikativ verbunden ist, wobei die Anordnung die sicherheitskritische Einrichtung (1) sowie das Kommunikationsendgerät (2) umfasst und
- das Kommunikationsendgerät (2) so ausgeführt ist, dass es
• ein nutzerseitiges Bedienkommando (BK) erfasst und für die Datenhaltung und die Datenbearbeitung zwei voneinander unabhängige Datenverarbeitungsprozesse bereithält, von denen einer aktiv ist und eine Anzeige des erfassten Bedienkommandos (BK) auf dem Bildschirm des Kommunikationsendgeräts (2) bewirkt und der andere zunächst parallel mitläuft,
• eine das erfasste Bedienkommando (BK) betreffende Bedieninformation (BI) an die sicherheitskritische Einrichtung (1) aussendet, wobei beide Datenverarbeitungsprozesse das erfasste Bedienkommando (BK) bearbeiten und die dabei jeweils gebildete Bedieninformation (BI) getrennt zu der sicherheitskritischen Einrichtung (1) übertragen wird,
• anhand einer von der sicherheitskritischen Einrichtung (1) übermittelten Bestätigungsinformation (BIF) eine Aktivierungscode-Information (AI) in einer nicht maschinenauswertbaren Form erzeugt und zusammen mit der Bestä-Ligungsinformation (BIF) anzeigt und
• eine durch Kombination der Aktivierungscode-Informat.ion (AI) mit einer nutzerspezifischen Operation (PIN) gebildete Bestätigungsantwort (BA) erfasst und zusammen mit einem aus der Bestätigungsinformation (BIF) gebildeten Hashwert (H) an die sicherheitskritische Einrichtung (2) sendet und wobei
- die sicherheitskritischen Einrichtung (1) so ausgebildet ist, dass
• sie die Bedieninformation (BI) empfängt, die empfangenen Bedieninformationen (BI) auf Übereinstimmung und Plausibilität überprüft und bei positivem Prüfungsergebnis eine Bestätigungsinformation (BIF) in einer kommunikationsendgerätefremden, durch die beiden Datenverarbeitungsprozesse nicht erzeugbaren Form erzeugt und an das mobile Kommunikationsendgerät (2) übermittelt, und
• im Falle einer erfolgreichen Überprüfung der Bestätigungsantwort (BA) und des Hashwertes (H) die Bedienung der sicherheitskritischen Einrichtung (1) ausführt.

6. Anordnung nach Anspruch 5, **dadurch gekennzeichnet, dass**
• das Kommunikationsendgerät (2) so ausgeführt ist, dass es
• mit Eingang der Bestätigungsinformation (BIF) im Kommunikationsendgerät (2) den anderen Datenverarbeitungsprozess aktiviert und den Bildschirm des Kommunikationsendgerätes (2) invertiert, so dass auf dem Bildschirm die Aktivierungscode-Information (A1) und die Bestätigungsinformation (BIF) angezeigt wird, und
• mittels beider Datenverarbeitungsprozesse zu der Bestätigungsinformation (BIF) einen Hashwert (H) berechnet.

7. Anordnung nach Anspruch 5 oder 6, **dadurch gekennzeichnet, dass**
• zwischen der sicherheitskritischen Einrichtung (1) und dem Kommunikationsendgerät (2) ein einziger Übertragungskanal vorhanden ist.

8. Anordnung nach Anspruch 5 oder 6, **dadurch gekennzeichnet, dass**
• zwischen der sicherheitskritischen Einrichtung (1) und dem Kommunikationsendgerät (2) zwei Übertragungskanäle vorhanden sind.

## Claims

1. Method for the safeguarded operation of a safety-critical device (1) by means of a mobile communication terminal (2), wherein
- a user-side operating command (BK) is detected by the mobile communication terminal (2), wherein two data processing processes which are independent of one another are used for data retention and data processing, one of which is active and causes the detected operating command (BK) to be displayed on the screen of the communication terminal, and the other of which initially runs in parallel,
- operating information (BI) relating to the detected operating command (BK) is transmitted from the mobile communication terminal (2) to the safety-critical device (1), wherein the detected operating command (BK) is processed by both data processing processes and the operating information (BI) formed in each case is transmitted separately to the safety-critical device (1),
- acknowledgement information (BIF) is generated by the safety-critical device (1) in a form which is extraneous to the communication terminal and cannot be generated by either of the data processing processes and is transmitted to the mobile communication terminal (2), wherein the safety-critical device (1) checks the received operating information (BI) for conformity and plausibility and if the result of the check is positive generates the acknowledgement information (BIF),
- based on the transmitted acknowledgement information (BIF), activation code information (AI) is generated by the mobile communication terminal (2) in a non-machine-evaluable form and is displayed together with the acknowledgement information (BIF) on the mobile communication terminal (2),
- an acknowledgement response (BA) formed by a combination of the activation code information (AI) with a user-specific operation (PIN) is detected by the mobile communication terminal (2) and is transmitted by the mobile communication terminal (2) to the safety-critical device (1) together with a hash value (H) formed from the acknowledgement information (BIF), and
- if the check on the acknowledgement response (BA) and the hash value (H) is successful, the operation of the safety-critical device (1) is executed.

2. Method according to claim 1, **characterised in that**
• on receipt of the acknowledgement information (BIF) in the communication terminal (2) the other data processing process is activated and the screen of the communication terminal (2) is inverted, such that the activation code information (AI) and the acknowledgement information (BIF) is displayed on the screen, and
• both data processing processes calculate a hash value (H) for the acknowledgement information (BIF).

3. Method according to claim 1 or 2, **characterised in that**
• a transmission channel is used for the transmission path.

4. Method according to claim 1 or 2, **characterised in that**
• two transmission channels are used for the transmission path.

5. Arrangement for the safeguarded operation of a safety-critical device (1), which is communicatively connected to a mobile communication terminal (2), wherein the arrangement comprises the safety-critical device (1) and the communication terminal (2) and
- the communication terminal (2) is embodied such that it
• detects a user-side operating command (BK) and holds in readiness two data processing processes which are independent of one another for data retention and data processing, one of which is active and causes the detected operating command (BK) to be displayed on the screen of the communication terminal (2), and the other of which initially runs in parallel,
• transmits operating information (BI) relating to the detected operating command (BK) to the safety-critical device (1), wherein both data processing processes process the detected operating command (BK) and the operating information (BI) formed in each case is transmitted separately to the safety-critical device (1),
• based on the acknowledgement information (BIF) transmitted by the safety-critical device (1), generates activation code information (AI) in a non-machine-evaluable form and displays it together with the acknowledgement information (BIF) and
• detects an acknowledgement response (BA) formed by a combination of the activation code information (AI) with a user-specific operation (PIN) and sends it to the safety-critical device (1) together with a hash value (H) formed from the acknowledgement information (BIF), and wherein
- the safety-critical device (1) is designed such that
• it receives the operating information (BI), checks the received operating information (BI) for conformity and plausibility and if the result of the check is positive generates acknowledgement information (BIF) in a form which is extraneous to the communication terminal and cannot be generated by either of the data processing processes and transmits it to the mobile communication terminal (2), and
• if the check on the acknowledgement response (BA) and the hash value (H) is successful, executes the operation of the safety-critical device (1).

6. Arrangement according to claim 5, **characterised in that**
• the communication terminal (2) is embodied such that
• on receipt of the acknowledgement information (BIF) in the communication terminal (2) it activates the other data processing process and inverts the screen of the communication terminal (2), such that the activation code information (AI) and the acknowledgement information (BIF) is displayed on the screen, and
• using both data processing processes it calculates a hash value (H) for the acknowledgement information (BIF).

7. Arrangement according to claim 5 or 6, **characterised in that**
• a single transmission channel is available between the safety-critical device (1) and the communication terminal (2).

8. Arrangement according to claim 5 or 6, **characterised in that**
• two transmission channels are available between the safety-critical device (1) and the communication terminal (2).

## Revendications

1. Procédé de conduite sécurisée d'un dispositif (1) critique du point de vue de la sécurité, au moyen d'un terminal (2) mobile de communication, dans lequel
- on détecte une instruction (BK) de conduite du côté de l'utilisateur, par le terminal (2) mobile de communication, dans lequel, pour la conservation des données et pour le traitement des données, on utilise deux processus, indépendants l'un de l'autre, de traitement des données, dont l'un est actif et provoque un affichage de l'instruction (BK) de conduite détectée sur l'écran du terminal de communication, et dont l'autre se déroule d'abord en parallèle,
- on transmet une information (BI) de conduite concernant l'instruction (BK) de conduite détectée du terminal de mobile de communication au dispositif (1) critique du point de vue de la sécurité, l'instruction (BK) de conduite détectée étant traitée par les deux processus de traitement de données et l'information (BI) de conduite formée respectivement étant transmise de manière séparée au dispositif (1) critique du point de vue de la sécurité,
- il est produit, par le dispositif (1) critique du point de vue de la sécurité, une information (BIF) de confirmation sous une forme étrangère au terminal de communication et ne pouvant pas être produite par les deux processus de traitement de données et elle est transmise au terminal (2) mobile de communication, le dispositif (1) critique du point de vue de la sécurité contrôlant les informations (BI) de conduite reçues en ce qui concerne leur coïncidence et leur vraisemblance et, si le résultat du contrôle est positif, produisant l'information (BIF) de confirmation,
- à l'aide de l'information (BIF) de confirmation transmise, il est produit, par le terminal (2) mobile de communication, une information (AI) de code d'activation sous une forme ne pouvant pas être exploitée par un ordinateur et elle est affichée, ensemble avec l'information (BIF) de confirmation, sur le terminal (2) mobile de communication,
- une réponse (BA) de confirmation, formée par une combinaison de l'information (AI) de code d'activation et d'une opération (PIN) spécifique à l'utilisateur, est détectée par le terminal (2) mobile de communication et, ensemble avec une valeur (H) de Hash formée à partir de l'information (BIF) de confirmation, est transmise par le terminal (2) mobile de communication au dispositif (1) critique du point de vue de la sécurité et,
- dans le cas où le contrôle de la réponse (BA) de confirmation et de la valeur (H) de Hash est couronné de succès, on effectue la conduite du dispositif (1) critique du point de vue de la sécurité.

2. Procédé suivant la revendication 1, **caractérisé en ce que**
• avec l'entrée de l'information (BIF) de confirmation dans le terminal (2) de communication, l'autre processus de traitement de données est activé et l'écran du terminal (2) de communication est inversé, de manière à afficher sur l'écran l'information (AI) de code d'activation et l'information (BIF) de confirmation et
• les deux processus de traitement de données calculent une valeur (H) de Hash en l'information (BIF) de confirmation.

3. Procédé suivant la revendication 1 ou 2, **caractérisé en ce que**
• on utilise un canal de transmission pour la section de transmission.

4. Procédé suivant la revendication 1 ou 2, **caractérisé en ce que**
• on utilise deux canaux de transmission pour la section de transmission.

5. Système de conduite sécurisée d'un dispositif (1) critique du point de vue de la sécurité, qui est relié en communication à un terminal (2) mobile de communication, le système comprenant le dispositif (1) critique du point de vue de la sécurité ainsi que le terminal (2) de communication et
- le terminal (2) de communication est réalisé de manière à ce que
• il détecte une instruction (BK) de conduite du côté de l'utilisateur et tient, pour la conservation de données et le traitement de données, en réserve, deux processus de traitement de données indépendants l'un de l'autre, dont l'un est actif et provoque un affichage de l'instruction (BK) de conduite détectée sur l'écran du terminal (2) de communication et l'autre se déroule d'abord en parallèle,
• il envoie, au dispositif (1) critique du point de vue de la sécurité une information (BI) de conduite concernant l'instruction (BK) de conduite détectée, les deux processus de traitement de données traitant l'instruction (BK) de conduite détectée et transmettant, de manière séparée, au dispositif (1) critique du point de vue de la sécurité, l'information (BI) de conduite formée ainsi respectivement,
• à l'aide d'une information (BIF) de confirmation, transmise par la dispositif (1) critique du point de vue de la sécurité, une information (AI) de code d'activation est produite sous une forme ne pouvant pas être exploitée par ordinateur et est affichée ensemble avec l'information (BIF) de confirmation et
• il détecte une réponse (BA) de confirmation, formée par combinaison de l'information (AI) de code d'activation à une opération (PIN) spécifique à l'utilisateur et l'envoie ensemble avec une valeur (H) de Hash formée à de l'information (BIF) de confirmation au dispositif (2) critique du point de vue de la sécurité et dans lequel
- le dispositif (1) critique du point de vue de la sécurité est constitué de manière
• à recevoir l'information (BI) de conduite, à contrôler les informations (BI) de conduite reçues pour voir si elles coïncident et sont vraisemblables et, si le résultat du contrôle est positif, à produire une information (BIF) de confirmation sous une forme étrangère au terminal de communication et ne pouvant pas être produite par les deux processus de traitement de données, et à la transmettre au terminal (2) mobile de communication et
• à exécuter, dans le cas d'un contrôle couronné de succès de la réponse (BA) de confirmation et de la valeur (H) de Hash, la conduite du dispositif (1) critique du point de vue de la sécurité.

6. Système suivant la revendication 5, **caractérisé**
• **en ce que** le terminal (2) de communication est réalisé de manière
• à ce qu'avec l'entrée de l'information (BIF) de confirmation dans le terminal (2) de communication, il active l'autre processus de traitement de données et inverse l'écran du terminal (2) de communication de manière à afficher sur l'écran l'information (A1) de code d'activation et l'information (BIF) de confirmation et
• il calcule une valeur (H) de Hash en l'information (BIF de confirmation au moyen des deux processus de traitement de données.

7. Système suivant la revendication 5 ou 6, **caractérisé**
• **en ce qu'**il y a un canal de transmission unique entre le dispositif (1) critique du point de vue de la sécurité et le terminal (2) de communication.

8. Système suivant la revendication 5 ou 6, **caractérisé**
• **en ce qu'**il y a deux canaux de transmission entre le dispositif (1) critique du point de vue de la sécurité et le terminal (2) de communication.
